Europäisches Patentamt

European Patent Office

Office européen des brevets

(11) Veröffentlichungsnummer: **0 002 740**
B1

(12) **EUROPÄISCHE PATENTSCHRIFT**

(45) Veröffentlichungstag der Patentschrift: **15.07.81**

(51) Int. Cl.³: **C 07 C 129/10**

(21) Anmeldenummer: 78101695.1

(22) Anmeldetag: **15.12.78**

(54) Verfahren zur Herstellung von kompaktem Nitroguanidin.

(30) Priorität: **17.12.77 DE 2756335**

(43) Veröffentlichungstag der Anmeldung:
**11.07.79 Patentblatt 79/14**

(45) Bekanntmachung des Hinweises auf die Patenterteilung:
**15.07.81 Patentblatt 81/28**

(84) Benannte Vertragsstaaten:
**BE DE FR GB NL SE**

(56) Entgegenhaltungen:
**CANADIAN JOURNAL OF RESEARCH
Band 25, SEC.F., Nr. 4, Juli 1947,
Ottawa, Kanada
E. J. PRITCHARD et al.
"Production of nitroguanidine with
high bulk-density"
Seiten 257 bis 263**

(73) Patentinhaber: **Fraunhofer-Gesellschaft zur
Förderung der angewandten Forschung e.V.
Leonrodstrasse 54
D-8000 München 19 (DE)**

(72) Erfinder: **Engel, Walter, Dr. Dipl.-Chem.
Frühlingsstrasse 21
D-7507 Pfintal-Berghausen (DE)**
Erfinder: **Heinisch, Herbert
Feldbergweg 19
D-7505 Ettlingen (DE)**

(74) Vertreter: **Lichti, Heiner, Dipl.-Ing. et al,
Durlacher Strasse 31
D-7500 Karlsruhe 41 Grö. (DE)**

Courier Press, Leamington Spa, England.

## Verfahren zur Herstellung von kompaktem Nitroguanidin

Die Erfindung betrifft ein Verfahren zur Herstellung von kompaktem Nitroguanidin hoher Schüttdichte aus einer heißen Nitroguanidin-Lösung durch Abkühlen und Rühren der Lösung.

Nitroguanidin wird als Treib- und Explosivstoff verwendet, dessen Detonationsgeschwindigkeit größer als die von T.N.T. ist und das wegen seiner großen Stoßunempfindlichkeit und seiner höheren Eigendichte gewisse Vorteile gegenüber herkömmlichen Explosivstoffen bietet. Auf der anderen Seite hat aber Nitroguanidin den Nachteil, daß es aus wässriger Lösung in langen Nadeln mit einem Schüttgewicht von 200 bis 300 g/l kristallisiert. Diese Kristallnadeln müssen, um eine weitere Verarbeitung zu ermöglichen, mechanisch zerkleinert werden. Bei einem solchen Zerkleinerungsprozeß wird jedoch nur die Länge der Nadeln verkürzt, ohne daß sich dadurch eine nennenswerte Erhöhung der Schüttdichte erreichen läßt. Schließlich ist das Mahlen eines Explosivstoffes wie Nitroguanidin nicht ohne Risiko.

Es hat deshalb nicht an Versuchen gefehlt, den Zerkleinerungsprozeß durch entsprechende Lenkung der Kristallisation zu vermeiden, indem beispielsweise Nitroguanidin in feiner Form (US—PS 23 18 577, 23 95 856, 24 45 478) oder mit großer Oberfläche (DT—PS 10 10 880, 11 42 860, FR—PS 11 16 300) auskristallisiert wird. Andere Verfahren gehen dahin, die Schüttdichte durch Änderung der Oberflächenform zu erhöhen. So ist es bekannt, der wässrigen Nitroguanidin-Lösung Stoffe zuzugeben, wie beispielsweise Nitroguanylhydrazon des Benzaldehyds (US—PS 29 46 820, GB 11 96 731), Polyvinylalkohol (DT—PS 10 48 528) oder Mannan (JP—PS 16 467). Diese Zusätze wirken sämtlich in Richtung kompakter Kristalle, wobei Schüttdichten zwischen 600 bis 900 g/l erreicht werden sollen.

Weiterhin ist es bekannt (Canadian Journal of Research, Juli 1947, Nr. 4, Seite 257 bis 263), eine heiße wässrige Lösung von Nitroguanidin mit einer Temperatur um 100° Celsius in ein anderes Lösungsmittel, das sich mit Wasser mischt, für Nitroguanidin jedoch keine oder nur eine sehr geringe Löslichkeit besitzt, einzugießen. Dabei weist das zweite Lösungsmittel anfangs etwa Raumtemperatur auf und die Mischung wird anschließend zunächst an Luft, dann im Wasserbad langsam abgekühlt. Als zweites Lösungsmittel werden Methanol, Äthanol und Aceton vorgeschlagen. Als günstiges zweites Lösungsmittel wurden Methanol und ein günstiges Mischungsverhältnis Wasser: Methanol von 1:2 bis 1:1 ermittelt. Die besten Ergebnisse hinsichtlich Schüttdichte, Gleichförmigkeit der Kristalle und Gießfähigkeit des Endproduktes wurden bei einem Temperaturgradient von 13 bis 16°C/min bei der Luftkühlung und ca. 14°C/min bei der Wasserbadkühlung erzielt.

Mit diesem bekannten Verfahren werden gegenüber anderen herkömmlichen Verfahren größere stabförmige Kristalle und — bei günstigsten Versuchsbedingungen — ein maximales Schüttgewicht von 960 g/l erzielt. In Abwandlung dieses Verfahrens ist es bekannt (Industrial and Engineering Chemistry, Vol. 41 (1949), S. 1286 bis 1290) statt von einer wässrigen Lösung von einer Lösung in einwertigen Alkoholen, z.B. Isopropanol oder n-Butanol auszugehen. Die Ergebnisse sind im wesentlichen die gleichen, wobei ausschließlich nadelförmige Kristalle entstehen. Hier wird auch eine gesättigte, kochende Lösung von Nitroguanidin in Methanol, Äthanol oder n-Butanol beschrieben, die direkt, also ohne Zugabe in ein zweites Lösungsmittel, abgekühlt wird. Dabei ergaben sich aber schlechtere Ergebnisse als beim Abkühlen einer gesättigten wässrigen Lösung.

Die Erfindung liegt die Aufgabe zugrunde, das eingangs genannte Verfahren dahingehend weiterzubilden, daß neben höheren Schüttdichten eine kompakte Form und damit gute Fließeigenschaften erreicht werden können, die es insbesondere gestatten, Nitroguanidin aufzuschlämmen und als gießfähige Masse verarbeiten zu können.

Diese Aufgabe wird erfindungsgemäß dadurch gelöst, daß als Lösungsmittel mehrwertige, niedere aliphatische Alkohole, mit z.B. $C_1$ bis $C_4$, deren Mono- und Dialkyläther, Dimethylformamid, Dimethylsulfoxid oder Gemische derselben verwendet werden und die Lösung bei einem Temperaturgradienten von mehr als 3°C/min so abgekühlt wird, daß die sich beim Abkühlen einstellende Übersättigung der Lösung erst bei Temperaturen unterhalb 50°C zur Kristallbildung führt.

Als Beispiele, für die verwendeten Alkohole und deren Äther seien genannt: Äthylenglykol, Diäthylenglykol, deren Monomethyläthyl-, isopropyl- und butyläther, Propandiol, Butandiol und Glycerin. Wesentlich ist, daß das Lösungsmittel, die Ausgangstemperatur der Lösung und die Kühltemperatur (direkte oder indirekte Kühlung) so aufeinander abgestimmt werden, daß eine starke Übersättigung erreicht wird, die Kristallbildung jedoch erst bei Temperaturen unter 50°C einsetzt. Der erfindungsgemäß geforderte Temperaturgradient muß zumindest bis zur einsetzenden Kristallbildung aufrechterhalten werden.

Praktische Versuche haben gezeigt, daß sich bei Verwendung der vorgenannten Lösungsmittel und Einhaltung bzw. entsprechender Einstellung der thermischen Parameter kugeliges Nitroguanidin bei guter Ausbeute erhalten läßt. Die entstehenden Partikel sind polykristallin.

Es ist zwar Dimethylformamid als Lösungsmittel für Nitroguanidin bereits beschrieben worden (Hatler L. E. in Los Alamos Informal Report LA—5235—MS, Herausgeber: US—Department of Commerce, Springfield/Virginia), jedoch ergaben sich auch hierbei keine kugeligen Partikel, sondern unregelmäßige Kristallhaufen, weil offenbar die erfindungsgemäßen Versuchsbedingungen nicht erkannt worden sind. Hier wird zur Verbesserung der Kristallform der Zusatz eines Polyamidharzes vorgeschlagen, wobei sich blockförmige Einkristalle bilden sollen. Die Erfindung kommt ohne solche Zusätze zu besseren Ergebnissen.

Das erfindungsgemäße Verfahren kann auch in Kombination mit dem eingangs geschilderten bekannten Umkristallisieren durchgeführt werden, indem die heiße Nitroguanidin-Lösung in ein zweites, kaltes Lösungsmittel von z.B. 0°C, das sich mit dem ersten Lösungsmittel mischt, in welchem aber Nitroguanidin nicht oder nur schwer löslich ist, eingegossen und das Gemisch weiter abgekühlt wird. Auch hierbei bilden sich bei Einhaltung der vorgenannten thermischen Bedingungen kugelige polykristalline Partikel hoher Schüttdichte.

Das zweite Lösungsmittel kann — wie beim Stand der Technik — aus einem niederen aliphatischen Alkohol oder Aceton, aber auch aus Tetrahydrofuran, Dioxan, Chloroform, Tetrachlorkohlenstoff oder Benzol bzw. aus einem Gemisch derselben bestehen. Die heiße Nitroguanidin-Lösung kann gegebenenfalls noch ein weiteres Lösungsmittel, z.B. Wasser, Xylol od. dgl. einthalten. Die Ausgangstemperatur der Nitroguanidin-Lösung beträgt vorzugsweise zwischen 80° und 150°C, während die Abkühlung vorzugsweise bei einer Kühlmitteltemperatur von etwa 0°C erfolgt. Wird ein zweites Lösungsmittel mit einer Temperatur von 0°C verwendet, so erhöht sich die Temperatur beim Eingießen der heißen Nitroguanidin-Lösung auf Temperaturen zwischen 30° und 50°C. Es hat sich deshalb als vorteilhaft erwiesen, das Gemisch aus Nitroguanidin-Lösung und dem zweiten Lösungsmittel ständig bei ca. 0° Celsius abzukühlen.

Die nach Trennen der Partikel zurückbleibende Mutterlauge kann in einem kontinuierlichen Prozeß wieder zurückgeführt und durch Zugabe von Lösungsmittel und Nitroguanidin wieder auf den Sättigungsgrad eingestellt werden.

Nachstehend sind einige Ausführungsbeispiele angegeben, wobei stets von gesättigten Lösungen ausgegangen wird.

### Beispiel 1

10 g *Nitroguanidin* werden in 400 g *Glycerin* bei einer Temperatur von 110°C gelöst und im Eisbad unter Rühren abgekühlt. Bei etwa 20°C bilden sich die ersten Kristalle. Nach einer Rührzeit von 2$^h$ ist ein kugeliges Produkt entstanden, das abgesaugt, mit Aceton gewaschen und getrocknet wird. Bei diesem wie auch allen folgenden Beispielen erreicht die Lösung nach 10 bis 15 Minuten etwa 0°C.

Ausbeute: 9,4 g
Schüttdichte: 990 g/l

### Beispiel 2

20 g *Nitroguanidin* werden in 400 g *Äthylenglykol* bei ca. 95°C gelöst und unter Rühren im Eisbad abgekühlt. Die ersten Kristalle bilden sich bei 50°C. Nach 1$^h$ Rührzeit ist ein kugeliges Produkt entstanden. Nach Absaugen, Waschen in Aceton und Trocknen werden folgende Werte erhalten:

Ausbeute: 16 g
Schüttdichte: 1020 g/l

### Beispiel 3

20 g *Nitroguanidin* werden in 400 g *Diäthylenglykol* bei 100°C gelöst und unter Rühren im Eisbad gekühlt. Die ersten Kristalle erscheinen bei etwa 30°C und nach 1$^h$ Rührzeit wird ein kugeliges Produkt erhalten. Nach Absaugen, Waschen in Aceton und Trocknen werden folgende Werte erhalten:

Ausbeute: 11,0 g
Schüttdichte: 1000 g/l

### Beispiel 4

14 g *Nitroguanidin* werden in 400 g *Äthylenglykolmonoäthyläther* bei 130°C gelöst und unter Rühren im Eisbad abgekühlt. Die ersten Kristalle bilden sich bei ca, 45°C. Nach einer Rührzeit von 1$^h$ fällt kugeliges Nitroguanidin aus. Nach Absaugen, Waschen in Aceton und Trocknen werden folgende Werte erhalten:

Ausbeute: 7,9 g
Schüttdichte: 950 g/l

### Beispiel 5

32 g *Nitroguanidin* werden in 400 g *Diäthylenglykolmonomethyläther* bei 150°C gelöst und unter Rühren im Eisbad abgekühlt. Nach 2$^h$ erscheinen bei 0°C die ersten Kristalle und nach 4$^h$ Rühren und anschließendem Absaugen, Waschen in Aceton und Trocknen wird ein kugeliges Produkt mit folgenden Werten erhalten:

Ausbeute: 17,5 g
Schüttgewicht: 960 g/l

### Beispiel 6

100 g *Nitroguanidin* werden in 400 g *Dimethylformamid* bei 85°C gelöst und unter Rühren im Eisbad abgekühlt. Die ersten Kristalle bilden sich bei 0°C. Nach 2$^h$ Rührzeit im Eisbad ist ein kugeliges Produkt entstanden, das nach Absaugen, Waschen in Aceton und Trocknen des kugeligen Produktes folgende Werte erkennen läßt:

Ausbeute: 34 g
Schüttgewicht: 980 g/l

### Beispiel 7

60 g Nitroguanidin werden in einem Gemisch von je 200 g *Dimethylformamid* und *Diäthylenglykolmonomethyläther* bei 110°C gelöst. Nach 1$^h$ Rührzeit im Eisbad und anschließendem Absaugen des kugeligen Produktes, Waschen mit Aceton und Trocknen ergeben sich folgende Werte:

Ausbeute: 39,3 g
Schüttgewicht: 910 g/l

Hier entstehen die ersten Kristalle bei ca. 40°C.

### Beispiel 8

35 g *Nitroguanidin* werden in einem Gemisch von je 200g *Dimethylformamid* und *Xylol* bei 120°C gelöst. Nach 1$^h$ Rühren im Eisbad fällt kugeliges Nitroguanidin an, nachdem die ersten Kristalle bei ca. 35°C entstanden waren. Nach Absaugen, Waschen mit Aceton und Trocknen werden folgende Werte festgestellt:

Ausbeute: 16,5 g
Schüttgewicht: 990 g/l

### Beispiel 9

40 g *Nitroguanidin* werden in einem Gemisch von 0,25 l *Glycerin* und 0,25 l *Wasser* bei ca. 95°C gelöst und unter Rühren in 1 l *Propanol-(2)* von 0°C gegossen. Die Temperatur steigt dabei auf ca. 44°C an. Die Kristallisation setzt sofort ein. Durch weiteres Rühren im Eisbad kühlt die Mischung auf 0°C ab. Nach 1$^h$ Rühren wird das ausgefallene Nitroguanidin abgesaugt, mit Propanol-(2) gewaschen und bei 70 bis 80°C getrocknet. Das Nitroguanidin hat kugelige Form.

Ausbeute: 30,7 g entsprechend 76,75%
Schüttdichte: 940 g/l

### Beispiel 10

In 0,5 l *Athylenglykol* werden bei 100 bis 110°C 50 g *Nitroguanidin* gelöst und unter Rühren zu 1,5 l *Aceton* von 0°C gegossen. Die Temperatur steigt dabei auf ca. 36°C an. Durch weiteres Rühren im Eisbad kühlt die Mischung auf 0°C ab. Nach einer Stunde Rühren im Eisbad wird das ausgefallene Nitroguanidin abgesaugt, mit Aceton gewaschen und bei 70 bis 80°C getrocknet. Das ausgefallene Nitroguanidin hat kugelige Form.

Ausbeute: 42 g entsprechend 84%
Schüttdichte: 1020 g/l

Das Auskristallisieren aus der stark übersättigten Lösung und die Temperatur bei der das Auskristallisieren erfolgt, läßt sich gegebenenfalls durch Zusatz von Impfkeimen während des Abkühlprozesses steuern. Durch solche Zusätze läßt sich auch die Teilchengröße zu kleineren Werten, hin verschieben beispielsweise zwischen 40 bis 100 $\mu$ mittlerer Große. Hierfür kommen in erster Linie unlösliche Stoffe mit kleiner Korngröße in Frage, z.B. $SiO_2$ $TiO_2$, CuO, PbO, aber auch feinkörniges Nitroguanidin von z.B. 3 bis 4 $\mu$. Schließlich kann auch ein anderer Explosivstoff, z.B. RDX oder HMX, verwendet werden, dessen Partikel dann den Kern des polykristallinen Nitroguanidinkorns bilden.

Bemerkt sei noch, daß bei allen vorgenannten Beispielen der Rührer eine Drehzahl zwischen 100 und 300 U/min aufweisen sollte. Setzt die Kristallisation bei zu hoher Temperatur ein (50°C), ist die Schüttdichte im allgemeinen schlecht, was ein Anzeichen dafür ist, daß die Ausgangskonzentration zu hoch ist. Durch Herabsetzen der Ausgangstemperatur der gesättigten Lösung läßt sich die Ausgangskonzentration der Lösung variieren, so daß unter Anpassung an das jeweilige Lösungsmittel die optimalen Bedingungen leicht festzustellen sind.

## Patentansprüche

1. Verfahren zur Herstellung von kompaktem Nitroguanidin hoher Schüttdichte aus einer heißen, gesättigten Nitroguanidin-Lösung durch Abkühlen und Rühren der Lösung, dadurch gekennzeichnet, daß als Lösungsmittel mehrwertige niedere aliphatische Alkohole, deren Mono- oder Dialkyläther, Dimethylformamid, Dimethylsulfoxid oder Gemische derselben verwendet werden und die Lösung bei einem Temperaturgradienten von mehr als 3°C/min so abgekühlt wird, daß die sich beim Abkühlen einstellende Übersättigung der Lösung erst bei Temperaturen unterhalb 50°C zur Kristallbildung führt.

2. Verfahren nach Anspruch 1, dadurch gekennzeichnet, daß die heiße Nitroguanidin-Lösung in ein kaltes zweites Lösungsmittel, das sich mit dem ersten Lösungsmittel mischt, in welchem aber Nitroguanidin nicht oder nur schwer löslich ist, eingegossen und weiter abgekühlt wird.

3. Verfahren nach Anspruch 1 oder 2, dadurch gekennzeichnet, daß die heiße Nitroguanidin-Lösung ein weiteres Lösungsmittel, z.B. Wasser, Xylol enthält.

4. Verfahren nach Anspruch 2, dadurch gekennzeichnet, daß das zweite Lösungsmittel aus einem niederen aliphatischen Alkohol, Aceton, Tetrachlorkohlenstoff, Dioxan, Tetrahydrofuran, Benzol oder aus einem Gemisch derselben besteht.

5. Verfahren nach einem der Ansprüche 1 bis 4, dadurch gekennzeichnet, daß die heiße Nitroguanidin-Lösung eine Ausgangstemperatur zwischen 80 und 150° aufweist.

6. Verfahren nach einem der Ansprüche 1 bis 5, dadurch gekennzeichnet, daß die heiße Nitroguanidin-Lösung bei einer konstanten Tem-

peratur von ca. 0°C gekühlt wird.

7. Verfahren nach einem der Ansprüche 2 bis 4, dadurch gekennzeichnet, daß das zweite Lösungsmittel eine Temperatur von ca. 0°C aufweist.

8. Verfahren nach Anspruch 7, dadurch gekennzeichnet, daß das Nitroguanidin-Lösungsmittelgemisch ständig bei 0°C gekühlt wird.

9. Verfahren nach einem der Ansprüche 1 bis 8, dadurch gekennzeichnet, daß der Temperaturgradient beim Abkühlten ca. 7°C/min beträgt.

10. Verfahren nach einem der Ansprüche 1 bis 9, dadurch gekennzeichnet, daß der Lösung bzw. dem Lösungsmittelgemisch Impfkeime, z.B. unlösliche Zusätze, wie SiO$_2$, TiO$_2$, CuO, PbO, oder feinkörniges Nitroguanidin, oder ein anderer feinkörniger Explosivstoff zugesetzt werden.

11. Verfahren nach Anspruch 1, dadurch gekennzeichnet, daß die nach dem Auskristallisieren und Trennen der Nitroguanidin-Kristalle verbleibende Mutterlauge wieder verwendet wird.

## Claims

1. Process for the preparation of compact nitroguanidine having a high bulk density from a hot saturated solution of nitroguanidine the solution being cooled and agitated, characterized in that the solvent is selected from the group consisting of polyhydric, lower aliphatic alcohols, mono- or dialkyl ethers thereof, dimethylformamide, dimethyl sulfoxide, or mixtures thereof and in that the solution is cooled at a temperature gradient of more than 3°C/minute such that crystallization of the nitroguanidine from the supersaturation of the solution resulting from cooling occurs only at temperatures of below 50°C.

2. Process according to claim 1, characterized in that the hot, nitroguanidine solution is poured into a cold second solvent miscible with the first solvent, but showing no solubility or a low solubility with respect to nitroguanidine, the resulting mixture being cooled on.

3. Process according to claim 1 or 2, characterized in that the hot nitroguanidine solution contains a further solvent for example water or xylene.

4. Process according to claim 2, characterized in that the second solvent consists of a lower aliphatic alcohol, acetone, carbon tetrachloride, dioxane, tetrahydrofuran, benzene, or a mixture thereof.

5. Process according to one of the claims 1 to 4, characterized in that the hot nitroguanidine solution has a starting temperature of between 80° and 150°C.

6. Process according to one of the claims 1 to 5, characterized in that the hot nitroguanidine solution is cooled in a coolant having a constant temperature of about 0°C.

7. Process according to one of the claims 2 to 4, characterized in that the second solvent has a temperature of about 0°C.

8. Process according to claim 7, characterized in that the nitroguanidine solution — second solvent mixture is continuously cooled at a constant temperature of about 0°C.

9. Process according to one of claims 1 to 8, characterized in that the temperature gradient during cooling is about 7°C./minute.

10. Process according to one of the claims 1 to 9, characterized in that nucleating agents, for example insoluble additives, like SiO$_2$, TiO$_2$, CuO, PbO or fine-grained nitroguanidine or other fine-grained explosives are added to the solution or the solution mixture.

11. Process according to claim 1, characterized in that the mother liquor, remaining after crystallization and separation of the nitroguanidine crystals is recycled.

## Revendications

1. Procédé de fabrication de nitroguanidine compacte d grande densité apparente à partir d'une solution de nitroguanidine saturée chaude, par refroidissement et agitation de la solution, caractérisé en ce qu'on emploie comme dissolvants des alcools aliphatiques inférieurs polyvalents, leurs éthers monoalkyliques ou dialkyliques, le diméthylformamide, le diméthylsulfoxyde ou des mélanges de ces corps, et en ce qu'on règle le refroidissement de la solution à une vitesse de refroidissement d'au moins 3°C/minute, de manière que la solution sursaturée formée lors du refroidissement ne commence à se cristalliser qu'à une température inférieure à 50°C.

2. Procédé selon la revendication 1, caractérisé en ce que la solution de nitroguanidine chaude est versée dans un deuxième dissolvant miscible avec le premier, mais dans lequel la nitroguanidine ne se dissout pas ou ne se dissout que difficilement, et qu'on continue ensuite le refroidissement.

3. Procédé selon la revendication 1 ou 2, caractérisé en ce que la solution chaude de nitroguanidine contient également un autre dissolvant, tel que, par exemple, l'eau ou le xylène.

4. Procédé selon la revendication 2, caractérisé en ce que le deuxième dissolvant est un alcool aliphatique inférieur, l'acétone, le tétrachlorure de carbone, le dioxane, le tétrahydrofurane, le benzène ou un mélange de ces corps.

5. Procédé selon l'une ou l'autre des revendications 1 à 4, caractérisé en ce que la température initiale de la solution chaude de nitroguanidine s'élève à 80—150°C.

6. Procédé selon l'une ou l'autre des revendications 1 à 5, caractérisé en ce que la solution chaude de nitroguanidine est refroidie à une température constante d'environ 0°C.

7. Procédé selon l'une ou l'autre des revendications 2 à 4, caractérisé en ce que le deuxième dissolvant se trouve à une température d'environ 0°C.

8. Procédé selon la revendication 7, caractérisé en ce que le mélange de nitroguanidine et de dissolvants est refroidi constamment à 0°C.

9. Procédé selon l'une ou l'autre des revendications 1 à 8, caractérisé en ce que la vitesse de refroidissement est égale à environ 7°C/minute pendant le refroidissement.

10. Procédé selon l'une ou l'autre des revendications 1 à 9, caractérisé en ce que la solution ou le mélange de dissolvants est inoculé de germes de cristallisation, tels que de fines particules de corps insolubles, comme le $SiO_2$, le $TiO_2$, le CuO ou le PbO, de fines particules de nitroguanidine ou d'autres explosifs finement divisés.

11. Procédé selon la revendication 1, caractérisé en ce qu'après la cristallisation de la nitroguanidine et la séparation des cristaux de nitroguanidine, la liqueur-mère est récupérée en vue de sa réutilisation.